# EUROPÄISCHE PATENTANMELDUNG

(11) **EP 1 175 950 A1**
(43) Veröffentlichungstag der Anmeldung: **30.01.2002**
(21) Anmeldenummer: 01117165.9
(22) Anmeldetag: 14.07.2001
(51) Int. Cl.: B23K 9/12, B23K 9/095

(54) **Steuerung für Schweissgeräte, insbesondere für die Vorschubgeschwindigkeit des Schweissdrahtes**

(30) Priorität: 28.07.2000 DE 10037264
(71) Anmelder: Lorch Schweisstechnik GmbH, 71549 Auenwald (DE)
(72) Erfinder: Jaeschke, Birger, 71522 Backnang (DE); Kraft, Michael, 71560 Sulzbach/Murr (DE); Mandel, Uwe, 15537 Grünheide (Mark) (DE); Prinz, Gerhard, 71554 Weissach im Tal (DE)
(74) Vertreter: Patentanwalts-Partnerschaft Rotermund + Pfusch

(57) **Zusammenfassung**

Bei Schweißgeräten kann sich die elektrische Leistung in Abhängigkeit von der Temperatur eines Schweißtransformators bzw. elektrisch stromführender Teile im Schweißstromkreis verändern, so daß eine zuvor eingestellte Vorschubgeschwindigkeit für Schweißdraht nicht mehr optimal ist. Erfindungsgemäß ist vorgesehen, automatisch in Abhängigkeit von der vorgenannten Temperatur automatisch in die Leistungssteuerung und/oder in die Steuerung der Vorschubgeschwindigkeit des Schweißdrahtes einzugreifen.

## Beschreibung

Die Erfindung betrifft eine Steuerung für Schweißgeräte mit einer Schweißstromquelle, welche einen primärseitig an eine elektrische Wechselstromquelle oder ein Wechselstromnetz anschließbaren und sekundärseitig einen Laststromkreis für einen Schweißprozess mit hohem elektrischen Strombedarf - insbesondere MIG-/MAG-Schweißprozess - speisenden Schweißtransformator aufweist, sowie mit einer Vorschubvorrichtung für Schweißdraht.

Üblicherweise lassen sich Schweißgeräte und zugeordnete Vorschubvorrichtungen für den Schweißdraht auf unterschiedliche elektrische Leistungen des Laststromkreises und angepasste Vorschubgeschwindigkeiten für die Schweißdrahtnachführung einstellen. Dabei ist es auch bekannt, eine Feineinstellbarkeit bzw. Justiermöglichkeit für die Vorschubgeschwindigkeit des Drahtes vorzusehen, um dem Benutzer des Schweißgerätes eine optimale Einstellung des Gerätes auf die jeweilige Schweißarbeit zu ermöglichen.

Damit wird gleichzeitig eine Möglichkeit der Anpassung der Drahtvorschubgeschwindigkeit geboten, wenn sich die elektrische Leistung des Laststromkreises im Verlauf der Schweißarbeit verändert.

In diesem Zusammenhang ist es aus der DE 1804943 A bekannt, den Vorschub des Schweißdrahtes zur Aufrechterhaltung eines konstanten Lichtbogenstromes umgekehrt proportional zu den elektrischen Stromänderungen zu steuern.

Aus der US 4,456,814 ist es bekannt, ein vom Schweißstrom abhängiges Signal den Drahtvorschub sowie die Schweißspannung steuern zu lassen.

Diese bekannten Vorrichtungen sind konstruktiv vergleichsweise aufwendig. Außerdem ist zu berücksichtigen, daß sich die elektrischen Schweißparameter vergleichsweise schnell ändern können.

Aufgabe der Erfindung ist es nun, eine konstruktiv einfache und gegebenenfalls leicht nachrüstbare Steuerung zur Korrektur der Vorschubgeschwindigkeit des Schweißdrahtes zu schaffen.

Diese Aufgabe wird erfindungsgemäß dadurch gelöst, daß die Vorschubgeschwindigkeit des von der Vorschubvorrichtung nachgeführten Schweißdrahtes automatisch in Abhängigkeit von einer Temperatur des Schweißtransformators bzw. eines stromführenden Teiles im Laststromkreis steuerbar ist.

Die Erfindung beruht auf dem allgemeinen Gedanken, die Vorschubgeschwindigkeit des Schweißdrahtes ohne direkte Erfassung der elektrischen Leistung automatisch analog zu Änderungen der elektrischen Leistung des Laststromkreises zu korrigieren. Bei der Schweißarbeit werden derartige Änderungen der elektrischen Leistung überwiegend von Änderungen der Temperatur sowie der damit einhergehenden Änderung des elektrischen Widerstandes leistungsbestimmender Bauteile der Schweißstromquelle, insbesondere der Temperatur des Schweißtransformators bzw. seiner Sekundärwicklung und/oder einer in der Regel im Laststromkreis angeordneten elektrischen Drossel bestimmt. Indem nun die Erfindung durch Erfassung der Temperatur solcher Bauteile die wesentliche Ursache für elektrische Leistungsschwankungen im Laststromkreis überwacht, kann die Drahtvorschubgeschwindigkeit entsprechend korrigiert werden.

Dabei ist vorteilhaft, daß mit der Temperaturerfassung auch eine Mittelwertbildung über zeitlich kurzfristige elektrische Leistungsschwankungen gewährleistet ist, so daß die Drahtvorschubgeschwindigkeit immer in einem für den Benutzer des Schweißgerätes voraussehbaren Maß korrigiert wird.

Gemäß einer besonders bevorzugten Ausführungsform der Erfindung ist für die temperaturabhängige Steuerung des Vorschubes des Schweißdrahtes ein Temperaturfühler an derjenigen Wicklung des Schweißtransformators vorgesehen, die sich beim Schweißbetrieb regelmäßig am stärksten erwärmt. Damit wird der Tatsache Rechnung getragen, daß unterschiedliche Bereiche des Schweißtransformators thermisch unterschiedlich stark belastet werden. Gleichzeitig wird der Vorteil erreicht, daß die Steuerung der Drahtvorschubgeschwindigkeit besonders feinfühlig und bedarfsgerecht arbeiten kann. Schließlich kann der Temperaturfühler auch eine Überlastsicherung steuern, durch die der Schweißbetrieb notfalls automatisch unterbrochen wird.

Zusätzlich zur erfindungsgemäßen Steuerung der Vorschubgeschwindigkeit des Schweißdrahtes kann vorgesehen sein, die Einstellung von Leistungssteuerorganen der Schweißstromquelle automatisch in Abhängigkeit von der Temperatur des Schweißtransformators bzw. eines stromführenden Teiles im Laststromkreis zu verändern, um von Temperaturänderungen bewirkte Änderungen der elektrischen Leistung des Laststromkreises zumindest teilweise zu kompensieren.

Hier wird berücksichtigt, daß die elektrische Leistung die jeweilige Schweißleistung bestimmt und dementsprechend bei hinreichender Verminderung von Leistungsschwankungen ohne bzw. mit nur geringer Veränderung der Vorschubgeschwindigkeit des Schweißdrahtes optimal gearbeitet werden kann.

Bei einer stufengeschalteten Schweißstromquelle kann eine automatische Umschaltung der Leistungsstufen in Abhängigkeit von der überwachten Temperatur eines Strom führenden Teiles im Laststromkreis erfolgen, um eine grobe Kompensation temperaturbedingter Leistungsänderungen zu erreichen und die ggf. noch erwünschten automatischen Änderungen der Vorschubgeschwindigkeit des Schweißdrahtes gering zu halten.

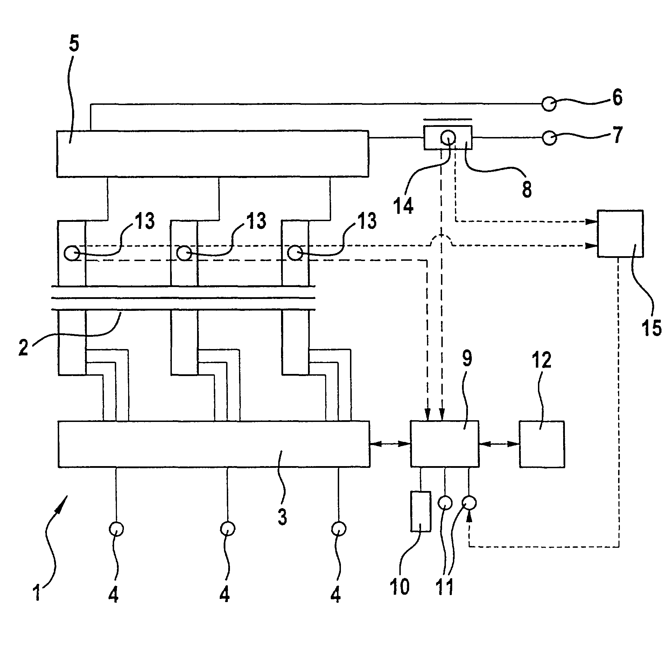

Im übrigen wird hinsichtlich bevorzugter Merkmale der Erfindung auf die Ansprüche sowie die nachfolgende Erläuterung der Zeichnung verwiesen, anhand der die Erfindung noch näher erläutert wird.

Dabei zeigt die einzige Figur in stark schematisierter Wiedergabe ein Schweißgerät mit erfindungsgemäßer Steuerung.

Gemäß der Zeichnung besitzt eine Schweißstromquelle 1 einen im dargestellten Beispiel dreiphasigen Schweißtransformator 2, welcher primärseitig über ein Schaltaggregat 3 mit Netzanschlüssen 4 zum Anschluß an ein (in der Regel öffentliches) Wechselstromnetz und sekundärseitig mit einer Seite eines Gleichrichters 5 verbunden ist, dessen andere Seite in grundsätzlich bekannter Weise einen Werkstückanschluß 6 sowie einen Schweißelektrodenanschluß 7 aufweist, wobei zwischen dem Gleichrichter 5 und dem Schweißelektrodenanschluß 7 in der Regel eine elektrische Drossel 8 angeordnet ist, um den Schweißprozess zu stabilisieren und eine Überlastung bzw. einen Kurzschluß des Gleichrichters 5 während der Schweißarbeit zu verhindern.

Mittels des Schaltaggregates 3 kann das Übersetzungsverhältnis des Schweißtransformators 2 entsprechend einer vorgegebenen Vielzahl von Stufen verändert werden, so daß sich der Sekundärkreis des Transformators 2, welcher den Schweißprozess speist, auf entsprechend viele Leistungsstufen einstellbar ist.

Zur Betätigung des Schaltaggregates 3 dient eine Steuerung 9, die einerseits über eine manuell betätigte Steuerhandhabe 10 an der Schweißstromquelle 1 und andererseits über nicht dargestellte, entfernt angeordnete Befehlsgeber betätigt werden kann, die an zumindest einen Fernsteueranschluß 11 od.dgl. anschließbar sind.

Die Steuerung 9 steuert desweiteren eine Vorschubvorrichtung 12 für die Zuführung eines Schweißdrahtes, wenn dies bei dem jeweiligen Schweißprozess zur Bereitstellung von Schweißmaterial notwendig ist.

Der Schweißdrahtverbrauch wird einerseits durch das Material des Schweißdrahtes und andererseits durch die elektrische Leistung des Schweißprozesses bestimmt. Dementsprechend schaltet die Steuerung 9 die Vorschubvorrichtung 12 auf unterschiedliche Vorschubgeschwindigkeiten, wenn das Schaltaggregat 3 von der Steuerung 9 auf eine andere Leistungsstufe umgeschaltet wird. Zur Anpassung an das Drahtmaterial sowie zur Feinanpassung an den jeweiligen Schweißprozess kann die Vorschubgeschwindigkeit über die Steuerhandhabe 10 bzw. den Fernsteueranschluß 11 verändert werden.

Erfindungsgemäß sind dem Schweißtransformator 2, insbesondere dessen Sekundärwicklungen, und/oder der Drossel 8 Temperatursensoren 13 und 14 zugeordnet, die mit entsprechenden Eingängen der Steuerung 9 verbunden sind. Damit kann die Steuerung 9 Temperaturänderungen am Schweißtransformator 2 bzw. an der Drossel 8 und damit einhergehende temperaturabhängige Änderungen des elektrischen Widerstandes der Wicklungen des Transformators 2 oder der Drossel 8 erkennen.

Ohne weitere Maßnahmen würden diese Änderungen des elektrischen Widerstandes einerseits zu einer Änderung der für den jeweiligen Schweißprozess eingesetzten elektrischen Leistung führen und andererseits bewirken, daß die Drahtvorschubgeschwindigkeit der Vorschubvorrichtung 12 nicht mehr an die Schweißleistung angepaßt wäre.

Deshalb ist erfindungsgemäß vorgesehen, daß die Steuerung 9 in Abhängigkeit von den Signalen der Temperatursensoren 13 und/oder 14 das Schaltaggregat 3 umschaltet, um temperaturbedingte Änderungen der elektrischen Leistung möglichst gering zu halten, und/oder die Vorschubgeschwindigkeit der Vorschubvorrichtung 12 verändert, d.h. entsprechend der veränderten elektrischen Leistung automatisch korrigiert.

Die Korrektur der Drahtvorschubgeschwindigkeit kann beispielsweise dadurch erfolgen, daß ein von einem Steuerteil der Steuerung 9 ausgegebener unkorrigierter Sollwert der Drahtvorschubgeschwindigkeit mit einem temperaturabhängigen Anpassungsfaktor, der von einer weiteren Steuerteil der Steuerung 9 erzeugt wird, multipliziert wird, wobei der Anpassungsfaktor von der Differenz zwischen den von den Temperatursensoren 13 bzw. 14 ermittelten Temperatur-Istwerten und einer Normaltemperatur abhängig ist.

Statt dessen ist es auch möglich, daß in der Steuerung 9 eine Kennlinie oder ein Kennfeld einspeicherbar ist, aus der die Steuerung temperaturabhängige Befehle zur Betätigung des Schaltaggregates 3 und/oder zur Steuerung der Vorschubgeschwindigkeit der Vorschubvorrichtung 12 "ablesen" kann. Die Kennlinie bzw. das Kennfeld können nichtlinear bzw. gekrümmt ausgebildet und durch Programmierung der Steuerung 9 vorgebbar sein, wobei gegebenenfalls lediglich singuläre Punkte der Kennlinie bzw. des Kennfeldes vorgegeben werden müssen und die Kennlinie bzw. das Kennfeld im übrigen durch ein vorgegebenes bzw. vorgebbares Interpolationsverfahren automatisch erzeugt werden.

Erfindungsgemäß kann auch ein Zusatzgerät 15, z.B. mit Rechnersteuerung, vorgesehen sein, welches an entsprechenden Eingängen mit nachträglich an einem vorhandenen Schweißgerät 1 installierten Temperatursensoren 13 und 14 verbunden wird und über einen Ausgang an einen der Fernsteueranschlüsse 11 der Steuerung 9 angeschlossen wird, so daß der Steuerung 9 Korrekturbefehle zum Umschalten des Schaltaggregates 3 und/oder zur Korrektur der Vorschubgeschwindigkeit der Vorschubvorrichtung 12 in Abhängigkeit der von den Sensoren 13 und 14 erfaßten Temperaturen zugeführt werden können.

## Patentansprüche

1. Steuerung (9,15) für Schweißgeräte (1) mit einer Schweißstromquelle, welche einen primärseitig an eine elektrische Wechselstromquelle oder ein Wechselstromnetz anschließbaren und sekundärseitig einen Laststromkreis für einen Schweißprozess mit hohem elektrischen Strombedarf - insbesondere MIG-/MAG-Schweißprozess - speisenden Schweißtransformator (2) aufweist, sowie mit einer parametergesteuerten Vorschubvorrichtung (12) für Schweißdraht,
**dadurch gekennzeichnet,**
**daß** die Vorschubgeschwindigkeit des von der Vorschubvorrichtung (12) nachgeführten Schweißdrahtes automatisch in Abhängigkeit von einer Temperatur des Schweißtransformators (2) bzw. eines stromführenden Teiles (2,8) im Laststromkreis steuerbar ist.

2. Steuerung nach Anspruch 1,
**dadurch gekennzeichnet,**
**daß** die Leistung der Schweißstromquelle automatisch in Abhängigkeit von einer Temperatur des Schweißtransformators (2) bzw. eines stromführenden Teiles (2,8) im Laststromkreis steuerbar ist, derart, **daß** temperaturabhängige Änderungen elektrischer Widerstände im Laststromkreis zumindest teilweise kompensierbar sind.

3. Steuerung nach Anspruch 2,
**gekennzeichnet**
**durch** eine stufengeschaltete Schweißstromquelle mit automatischer Umschaltung der Leistungsstufen in Abhängigkeit von der Temperatur.

4. Steuerung nach einem der Ansprüche 1 bis 3,
**dadurch gekennzeichnet,**
**daß** die Temperatur einer Sekundärwicklung des Schweißtransformators (2) und/oder einer im Laststromkreis angeordneten elektrischen Drossel (8) für die Steuerung des Drahtvorschubes und/oder der Leistung bzw. Leistungsstufen erfaßbar ist.

5. Steuerung nach einem der Ansprüche 1 bis 4,
**gekennzeichnet**
**durch** ein Zusatzgerät (15), welches ausgangsseitig an einen Fernsteueranschluß (11) einer geräteseitigen Steuereinheit (9) des Schweißgerätes und eingangsseitig mit Sensoren (13,14) zur Erfassung einer Temperatur des Schweißtransformators (2) bzw. eines stromführenden Teiles im Laststromkreis des Schweißgerätes (1) verbindbar ist und der Steuereinheit (9) über den Fernsteueranschluß (11) in Abhängigkeit von der Temperatur Stellbefehle zur Veränderung der von der Steuereinheit (9) gesteuerten elektrischen Leistung des Schweißgerätes und/oder der Vorschubgeschwindigkeit einer von der Steuereinheit (9) gesteuerten Vorschubvorrichtung (12) für Schweißdraht zuleitet.

6. Steuerung nach einem der Ansprüche 1 bis 5,
**dadurch gekennzeichnet,**
**daß** ein zur Temperaturerfassung für die Steuerung der Vorschubgeschwindigkeit dienender Temperaturfühler auch eine Überlastsicherung des Schweißgerätes bzw. -transformators steuert.
